# DEMANDE DE BREVET EUROPEEN

(11) **EP 1 167 513 A1**
(43) Date de publication de la demande: **02.01.2002**
(21) Numéro de dépôt: 01450010.2
(22) Date de dépôt: 19.06.2001
(51) Int. Cl.: C12H 1/04, A23L 2/80

(54) **Procédé de fabrication d'un produit de clarification ou de collage et produit obtenu**

(30) Priorité: 19.06.2000 FR 0007868
(71) Demandeur: Produits Oenologiques J. Laffort & Cie (Société Anonyme), 33000 Bordeaux (FR)
(72) Inventeur: Laffort, Jean-Francois, 33800 Bordeaux (FR)
(74) Mandataire: Thébault, Jean-Louis

(57) **Abrégé**

- L'objet de l'invention est un procédé de fabrication d'un produit de clarification ou de collage adapté des boissons d'origine végétale ou de leurs dérivés fermentés, notamment un vin, caractérisé en ce qu'il consiste à faire subir à de l'albumine d'oeuf un traitement physico-chimique afin de faire varier d'une part la répartition des masses moléculaires des protéines qui la constitue et d'autre part de modifier la densité des charges électriques de surface, en conservant la phase liquide, sans coagulation.
- L'invention couvre aussi le produit de clarification ou collage obtenu par la mise en oeuvre du procédé.
- L'invention protège le procédé de clarification ou collage avec ce produit.

## Description

La présente invention concerne un procédé de fabrication d'un produit de clarification d'un vin et couvre aussi le produit de clarification obtenu.

Pour la suite de la description, on entend par clarification une action également connue sous le terme "collage" et les deux termes seront utilisés indifféremment.

De même, l'application indiquée ci-après concerne les vins compte-tenu des essais conduits mais de façon générale, l'application concerne l'ensemble des boissons d'origine végétale et de leurs dérivés fermentés.

On sait que le vin en bouteille, notamment, doit présenter une limpidité certaine pour être commercialisé. Afin de veiller à ce que cette limpidité soit conservée, il convient de recourir à des clarifiants.

A cet effet, on utilise des produits d'origine minérale ou organique, plus communément appelés "colles".

Dans le cas des vins blancs, on utilise plutôt des produits minéraux comme les kaolins ou les bentonites.

Dans le cas des vins rouges, on utilise plutôt des produits organiques comme l'albumine de sang, l'albumine d'oeuf et les gélatines.

Dans le cas de la présente invention, on s'intéresse plus particulièrement aux produits organiques.

Les gélatines oenologiques sont bien connues et le présent déposant propose non pas une gélatine mais différents types de gélatines adaptées chacune à un type de vin.

Ainsi, en fonction des caractéristiques du vin, on utilise une gélatine qui présente un spectre de poids moléculaires afin de conserver toutes les qualités organoleptiques de ce vin et même de les optimiser, tout en assurant leur clarification et leur stabilisation.

On a ainsi montré dans une publication L.LAGUNE-AMMIRATI, Revue des Oenologues N°87 que l'on peut maîtriser la fabrication des gélatines et assurer ainsi une reproductibilité permettant d'en faire un produit industriel.

La répartition en masse des protéines et surtout leurs charges conditionnent les propriétés de collage des gélatines oenologiques.

Lors des mécanismes de collage, les protéines des gélatines agissent sur les composés phénoliques des vins.

L'addition d'une solution de gélatine chargée positivement à une fraction contenant un mélange complexe de tanins qui portent des charges négatives en surface permet à la gélatine d'assurer la précipitation d'une grande partie de ces composés. Afin d'assurer un tri sélectif des actions de ce polyélectrolyte positif, il est utile de maîtriser le spectre de répartition des masses et des charges.

Une telle étape de collage permet d'affiner la structure d'un vin riche en tanins sans l'amaigrir ou d'entraîner les tanins les plus agressifs d'un vin présentant initialement un excès de tanins astringents.

Néanmoins, il se pose un certain nombre de problèmes réglementaires depuis l'apparition de l'encéphalopathie spongiforme bovine et/ou de la peste porcine dès lors que la gélatine est obtenue par hydrolyse partielle du collagène contenu dans les peaux, le tissu conjonctif et les os des bovins et ovins.

Il en est de même pour le collage par utilisation d'albumine du sang qui est maintenant interdite.

II subsiste comme succédané possible l'albumine d'oeuf qui est connue depuis longtemps.

Ce produit présentait un avantage avant les possibilités offertes par les gélatines à caractéristiques contrôlées, c'était sa stabilité.

En effet, l'albumine d'oeuf liquide est un produit extrêmement peu variable. Le poids moléculaire est distribué suivant une courbe de Gauss simple, centrée sur un poids moléculaire de 45 000.

L'albumine de l'oeuf présente donc toujours la même activité pour un type de vin. Elle se trouve tout à fait appropriée pour tel ou tel type de vin mais donne de piètres résultats pour d'autres.

De façon générale, l'albumine d'oeuf présente des inconvénients et notamment, elle est un clarifiant peu rapide.

De plus, la sédimentation est peu rapide, ceci dû au fait que les flocons constitués lors du collage sont légers. Ils se remettent facilement en suspension, ce qui nuit à l'efficacité du collage, plus particulièrement dans le cas de traitement de grands volumes et lorsqu'il y a des changements de pression atmosphérique.

Bien que l'albumine soit spécifiquement applicable au collage de certains vins, lorsqu'elle est adaptée, elle peut donner d'excellents résultats. L'albumine d'oeuf est utilisée telle quelle et elle n'a pas fait l'objet de modifications de spectres comme les gélatines.

En outre, l'albumine de l'oeuf est difficile à conserver à l'état frais et certains traitements provoquent très rapidement sa coagulation, ce qui n'incite pas à la conserver pour en modifier les propriétés.

L'homme de l'art n'était pas non plus incité à apporter des modifications puisque très récemment, l'albumine de sang et/ou la gélatine pouvaient être utilisées en donnant toute satisfaction.

Une solution consisterait aussi à utiliser des protéines végétales plutôt que des gélatines mais les organismes génétiquement modifiés peuvent être la source de ces protéines. D'autre part, les protéines végétales ne rentrent pas dans les listes positives des produits oenologiques et ne sont donc pas autorisées à l'heure actuelle.

La présente invention a pour but de permettre la fabrication d'un produit acceptable sur les listes positives des produits oenologiques, qui permet en outre un collage dans des conditions adaptées à chaque type de vin traité, qui reste d'un usage pratique et qui peut être fabriqué industriellement, de plus à l'abri des maladies des ovins et bovins.

A cet effet, le procédé de fabrication d'un produit de clarification ou de collage adapté de boissons d'origine végétale ou de leurs dérivés fermentés, notamment d'un vin, se caractérise, selon la présente invention, en ce qu'il consiste à faire subir à de l'albumine d'oeuf un traitement physico-chimique afin de modifier d'une part la répartition des masses moléculaires des protéines constituant cette albumine d'oeuf et d'autre part la densité des charges électriques de surface, en conservant la phase liquide, sans coagulation.

L'invention couvre aussi le produit de clarification ou de collage obtenu par la mise en oeuvre de ce procédé; le produit étant tel que la courbe de répartition des masses moléculaires est différente d'une courbe de Gauss comprenant un seul maximum centré sur une valeur de l'ordre de 45 000.

L'invention protège également le procédé de clarification ou collage à l'aide de ce produit.

Les dessins associées à la présente description permettent une illustration des effets du produit de clarification ou collage selon la présente invention et de confirmer les effets obtenus.

Sur les différentes planches, on a représenté
- figure 1, un exemple de spectre de répartition des masses protéiques avant et après traitement.
- figure 2, un chromatogramme d'un vin ayant subi l'action d'un premier produit selon l'invention par rapport au témoin,
- figure 3, un chromatogramme du même vin ayant subi l'action d'un second produit selon l'invention, par rapport au même témoin,
- figure 4, un spectre de répartition de masses du produit Albucoll,
- figure 5, un spectre comparé de répartition de masses des produits de clarification A et B selon l'invention,
- figure 6, un tableau des vins testés,
- figures 7A à 7D, des tableaux récapitulatifs des dépôts de lies,
- figure 8, un graphe des tests de turbidité,
- figure 9, un tableau de la constitution comparée de chacun des vins,
- figure 10, un tableau des analyses colorimétriques,
- figure 11, les résultats de stabilité,
- figure 12A à 12D, une note globale de dégustation après l'opération de clarification ou collage pour chacun des vins.

Le procédé selon la présente invention consiste à modifier les caractéristiques de l'albumine de l'oeuf pour permettre une clarification ou un collage adapté d'un produit donné d'origine végétale ou de ses dérivés fermentés, notamment d'un vin.

On entend par produit d'origine végétale ou de ses dérivés fermentés, en dehors du vin, le moût, le vinaigre, les jus de fruit, le cidre, la bière par exemple.

Le procédé consiste à faire varier la distribution du poids moléculaire de l'albumine de l'oeuf et à modifier la densité de charges de surface par des moyens physico-chimiques, en conservant la phase liquide, sans coagulation. La température est conservée entre 0 et 50°C, mieux entre 10 et 35°C.

Les moyens de modification de cette distribution et de ces charges peuvent être des moyens physiques notamment des moyens thermiques ou des moyens utilisant les effets de la pression, du vide, des vibrations à basses et/ou hautes fréquences.

On peut utiliser une voie chimique avec l'action de composés tels que des acides, des bases, des additifs comme l'alcool, les métaux lourds ou l'ammoniaque.

On peut aussi recourir à l'action des enzymes et notamment des protéases.

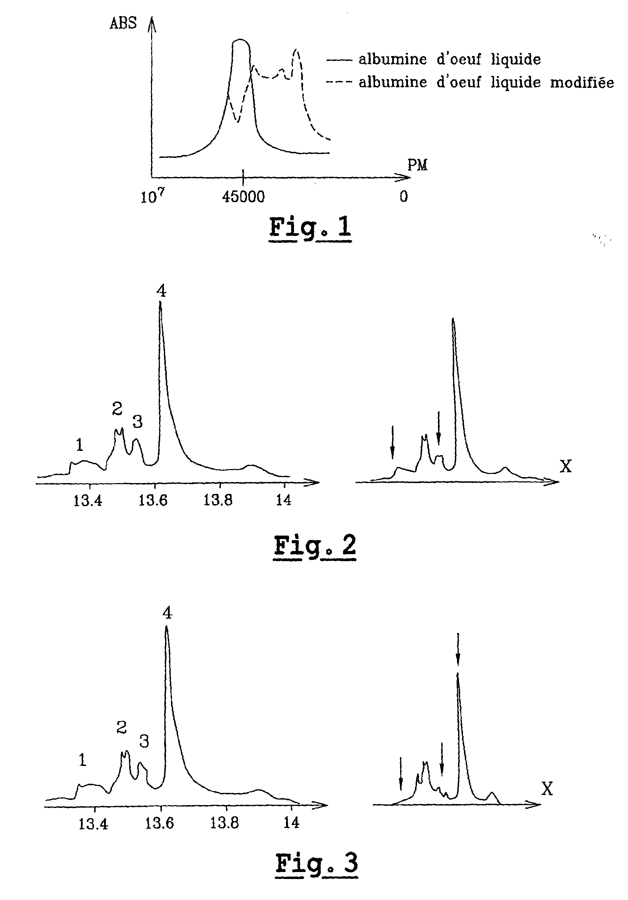

Ainsi en faisant varier l'intensité et la durée d'action de ces différents moyens, on peut ainsi partir du spectre représenté en trait plein sur la figure 1 qui montre la distribution, sous forme de courbe de Gauss, des masses moléculaires de l'albumine de l'oeuf pour transformer la répartition des masses moléculaires suivant le spectre représenté en trait discontinu.

De plus, on fait simultanément varier les densités de charge de surface qui pourront avoir une stabilité plus ou moins grande vis à vis du pH du vin en fonction des procédés employés.

Cette stabilité de la densité de charges est un facteur important pour obtenir un bon clarifiant.

Le procédé de clarification ou de collage selon la présente invention utilise de quantités de produits selon l'invention comprises entre 1 et 100g/hl.

A partir des produits ainsi obtenus, les actions sur certains vins peuvent être plus rapides, notamment la sédimentation des lies. On obtient également des sédiments plus ou moins tassés.

Il en découle une limpidité au moins comparable à celle des produits du commerce, voire améliorée, avec des caractères organoleptiques plus marqués par une meilleure adéquation vin-clarifiant.

Sur les figures 2 et 3, on constate les variations des spectres de vins traités au moyen d'albumine d'oeuf dont la répartition de masse moléculaire a été modifiée.

Afin de montrer mieux encore les pouvoirs clarifiant ou de collage de ces produits à spectre adapté, on a réalisé des tests plus avancés jusqu'à la dégustation.

On obtient ainsi des résultats tout à fait satisfaisants avec de tels produits comme le montrent les exemples qui suivent.

Les produits testés comprennent quatre produits de clarification dont deux sont du commerce et sont fabriqués et commercialisés par le déposant de la présente invention.

Le produit dit GS est commercialisé sous la dénomination Gecoll Supra.

Il s'agit de gélatines.

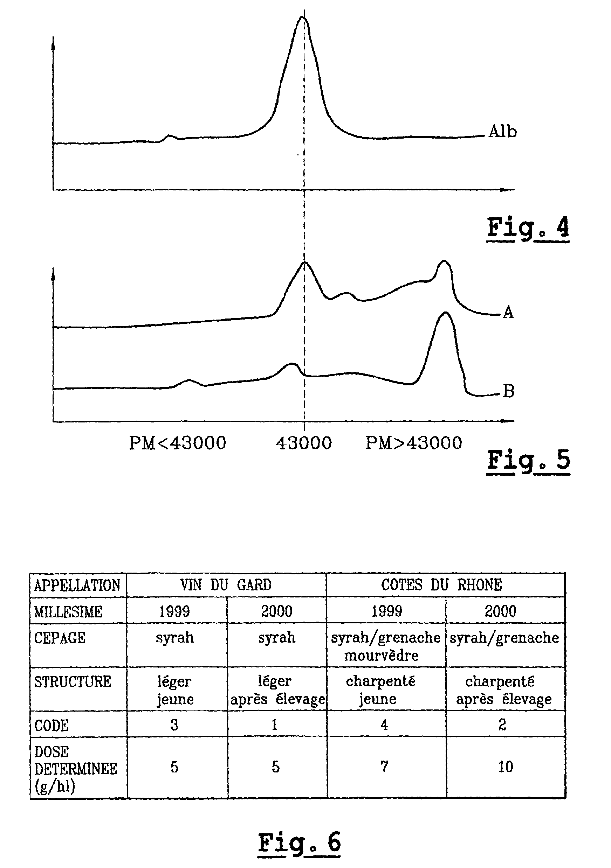

Le produit dit Alb est commercialisé sous la dénomination Albucoll. Il s'agit d'albumine d'oeuf liquide non modifiée. Le profil est celui de la courbe de la figure 4, très proche de la valeur 45 000.

Le produit A est une composition obtenue à partir d'albumine d'oeuf dont le spectre de répartition de masses a été modifié selon la courbe de la figure 5. Ce produit A se présente sous forme liquide.

Le produit B est une composition obtenue également à partir d'albumine d'oeuf dont le spectre de répartition de masses a été modifié selon la courbe de la figure 5. Ce produit B se présente aussi sous forme liquide.

Les tests portent sur des vins rouges de différentes origines et le tableau de la figure 6 récapitule les caractéristiques de ces vins : millésime, cépage, structure, dose de collage.

Cette dose de colle est déterminée préalablement pour chacun des vins afin de déterminer la valeur qui convient le mieux. Cette dose est ensuite appliquée à ce vin pour chacun des quatre produits testés, en sorte de pouvoir atteindre des résultats susceptibles d'être comparés.

Les analyses portent sur les différents paramètres suivants :
1/ HAUTEUR DE LIES (reflet de la sédimentation),
2/ TURBIDITE (corollaire du pouvoir de clarification)
3/ CONSTITUTION DU VIN (analyse huit jours après le collage)
   - dosages des composés phénoliques totaux, CPT
   - concentration en tanins en g/l
   - état colloïdal,
   - concentration en anthocyanes en mg/l

De plus, on teste aussi les variations éventuelles de coloration ainsi que les caractéristiques de stabilité.
4/ DEGUSTATION

Chacune de ces analyses est maintenant détaillée en regard des résultats obtenus.

### 1/ Hauteur de lies

Les essais sont conduits à l'aide de cônes Imhoff de 1000ml.

Les hauteurs sont exprimées en pour mille en fonction du temps avec une compression d'échelle.

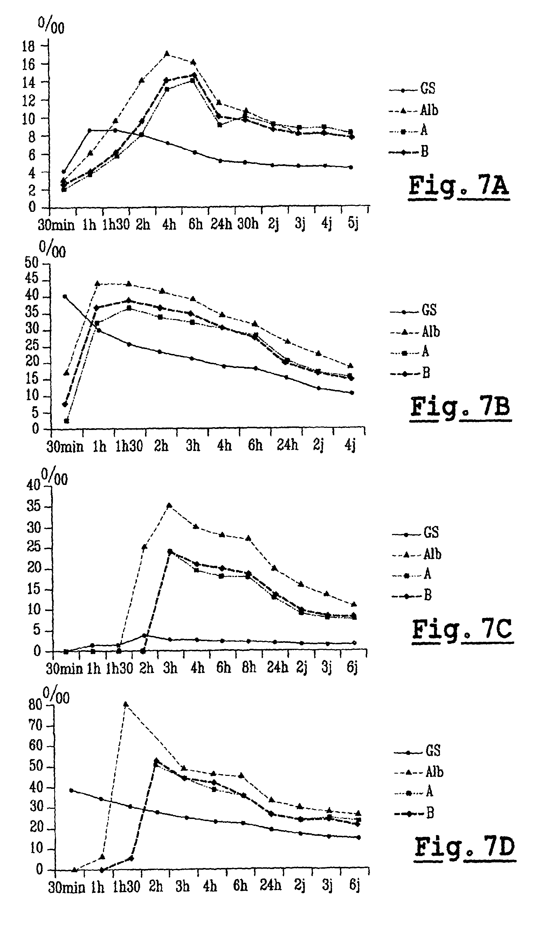

On constate à la lecture des courbes correspondant à l'accumulation des sédiments dans le cône, figures 7A à 7D, que les hauteurs de lies sont modérées quel que soit le produit utilisé, ceci pour chacun des quatre vins.

Les produits A et B de l'invention ne perturbent pas ce paramètre et l'améliore quand on le compare à l'albumine naturelle de Alb. Il y a donc une augmentation de la vitesse de sédimentation.

### 2/ Turbidité

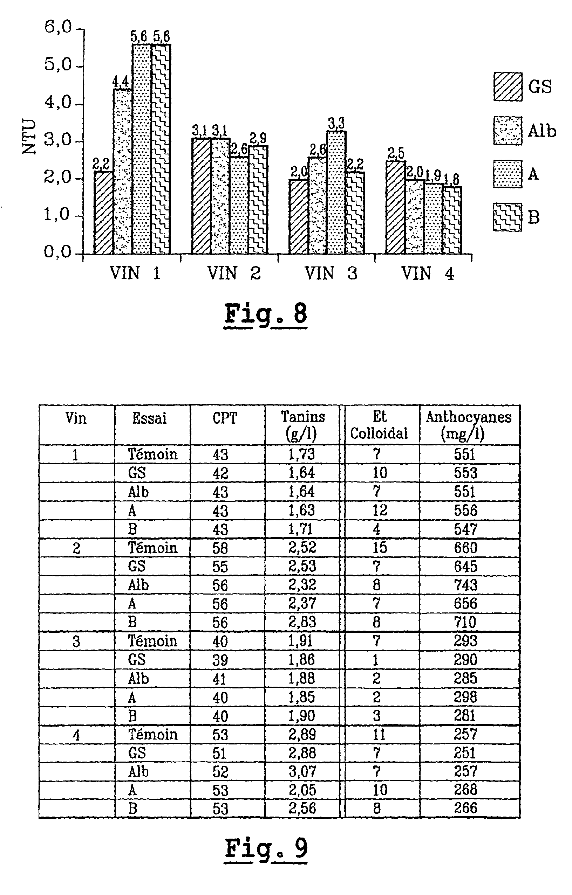

La turbidité est étudiée au cours du temps et on a indiqué dans le graphe de la figure 8 les résultats obtenus 24 heures après le collage.

La clarification est forte au début puis se stabilise au cours du temps et l'analyse à 24 heures est un bon indice.

On remarque une certaine équivalence des différents produits après 24 heures vis-à-vis des quatre vins testés.

Les turbidités sont comprises entre 1,8 et 5,6.

On constate que les produits A et B selon la présente invention permettent d'atteindre les mêmes résultats donc la modification de la répartition des masses moléculaires n'affecte pas le pouvoir de clarification.

### 3/ Constitution des vins

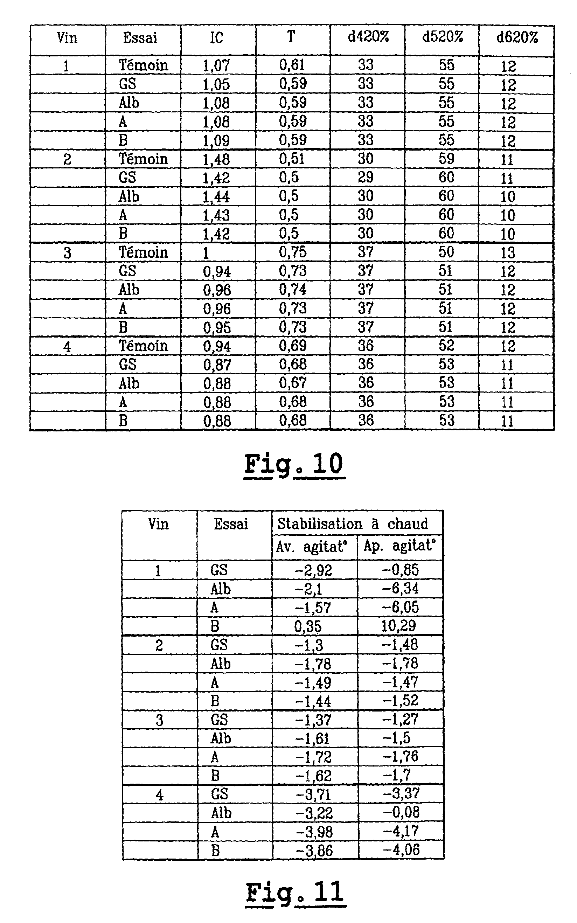

Les tests sont regroupés dans le tableau de la figure 9.

Les composés phénoliques totaux sont conservés au même taux avant et après collage.

De même la quantité de tanin est conservée après collage, comparé au témoin.

En ce qui concerne l'état colloïdal, on note une diminution après collage pour les vins 2 et 3 tandis que pour les autres, l'état reste quasiment constant.

Néanmoins, compte tenu des faibles valeurs, les incertitudes restent grandes et il est difficile d'en tirer des conclusions si ce n'est qu'il n'y a pas de décalages importants engendrés par la modification de la répartition des masses moléculaires pour les produits A et B. Quand il y a des variations, elles se retrouvent dans le même sens pour les quatre produits de collage.

Les quantités d'anthocyanes sont très peu affectées par les opérations de clarification ou collage.

On retrouve ce résultat dans les tests de coloration qui vont suivre.

Sur la figure 10, on a récapitulé les variations de couleur.

IC est l'intensité colorante, T est la teinte, D420, D520, D620 sont les pourcentages de jaune, vert et bleu respectivement.

On déduit des résultats confirmatifs : les opérations de clarification ou collage n'ont aucun effet sur la couleur du vin.

La figure 11 récapitule les résultats de stabilisation de la matière colorante. On calcule la différence entre la turbidité après collage et la turbidité témoin et on mesure cette turbidité après un passage à l'étuve pendant 3 heures à 80°C.

La valeur obtenue est négative si bien que l'opération de collage ou clarification a stabilisé la matière colorante, y compris pour les produits A et B.

### 4/ Dégustation

Des dégustateurs doivent noter de 0 à 7 les différents critères suivants :
- intensité aromatique,
- qualité aromatique,
- amertume,
- astringence,
- structure,
- rondeur, et
- note générale.

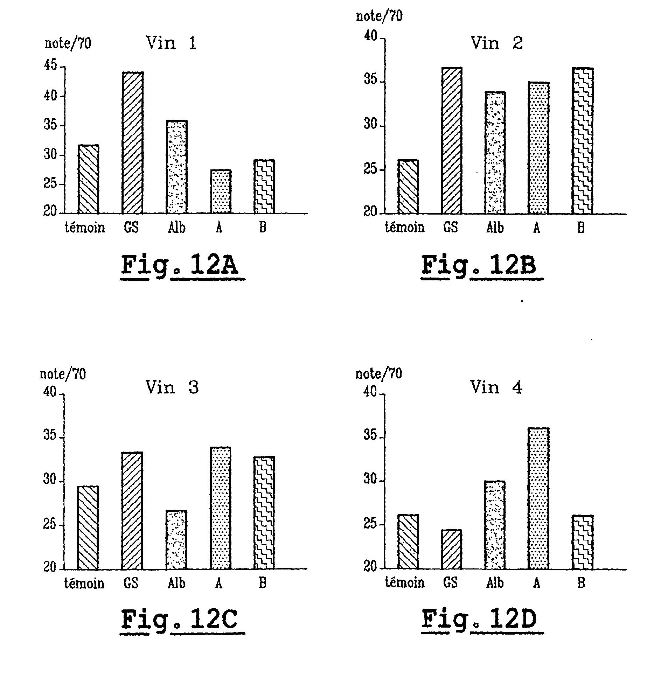

On constate sur les courbes à l'échelle 10 des figures 12A à 12D, que les produits A et B selon la présente invention, permettent pour certaines applications d'améliorer la qualité.

En effet, pour certains vins, l'albumine d'oeuf sans modification ne conduit pas aux résultats les meilleurs tandis que l'albumine à répartition modifiée des masses moléculaires a amélioré certains paramètres sans perturber les autres.

C'est ainsi que la qualité aromatique des vins est conservée avec tous les produits de clarification ou collage.

On note une légère diminution de l'amertume et de l'astringence avec les produits obtenus selon la présente invention. On y trouve aussi une augmentation des sensations de souplesse et de rondeur.

Les produits selon l'invention présentent donc des aptitudes à valoriser les caractéristiques organoleptiques de certains vins, ce qui ne serait obtenu que de façon imparfaite avec des produits du commerce à monospectre.

Le produit selon l'invention est liquide et permet un usage également facilité.

## Revendications

1. Procédé de fabrication d'un produit de clarification adaptée ou de collage adapté de boissons d'origine végétale ou de leurs dérivés fermentés, notamment d'un vin, **caractérisé en ce qu'**il consiste à faire subir à de l'albumine d'oeuf un traitement physico-chimique afin de faire varier d'une part la répartition des masses moléculaires des protéines qui la constitue et d'autre part de modifier la densité des charges électriques de surface, en conservant la phase liquide, sans coagulation.

2. Procédé de fabrication selon la revendication 1, **caractérisé en ce que** le traitement physico-chimique utilise des moyens thermiques.

3. Procédé de fabrication selon la revendication 1, **caractérisé en ce que** le traitement physico-chimique utilise des moyens physiques mettant en oeuvre les effets de la pression.

4. Procédé de fabrication selon la revendication 1, **caractérisé en ce que** le traitement physico-chimique utilise des moyens physiques mettant en oeuvre les effets du vide.

5. Procédé de fabrication selon la revendication 1, **caractérisé en ce que** le traitement physico-chimique utilise des moyens physiques mettant en oeuvre les effets des vibrations à basses et/ou hautes fréquences.

6. Procédé de fabrication selon la revendication 1, **caractérisé en ce que** le traitement physico-chimique utilise des moyens chimiques mettant en oeuvre des composés tels que des acides, des bases, des additifs comme l'alcool, les métaux lourds ou l'ammoniaque.

7. Procédé de fabrication selon la revendication 1, **caractérisé en ce que** le traitement physico-chimique utilise des moyens chimiques mettant en oeuvre des enzymes.

8. Procédé de fabrication selon la revendication 7, **caractérisé en ce que** les enzymes sont des protéases.

9. Procédé de fabrication selon l'une quelconque des revendications précédentes, **caractérisé en ce que** la fabrication est conduite à une température comprise entre 0 et 50°C, de préférence entre 10 et 35°C

10. Produit de clarification adaptée ou de collage adapté, obtenu par la mise en oeuvre de l'une quelconque des revendications précédentes de procédé, **caractérisé en ce qu'**il comprend de l'albumine d'oeuf liquide, sans coagulation, avec une courbe de répartition des masses moléculaires différente d'une courbe de Gauss comprenant un seul maximum centré sur une valeur de l'ordre de 45000.

11. Procédé de clarification ou de collage de boissons d'origine végétale ou de leurs dérivés fermentés, notamment d'un vin, **caractérisé en ce que** l'on utilise pour un produit donné un produit selon la revendication 10, obtenu par le procédé selon l'une des revendications 1 à 9.

12. Procédé de clarification ou de collage de boissons d'origine végétale ou de leurs dérivés fermentés selon la revendication 11, **caractérisé en ce que** les quantités de produits sont comprises entre 1 et 100g/hl.
